# FASCICULE DE BREVET EUROPEEN

(11) **EP 2 742 260 B1**
(45) Date de publication et mention de la délivrance du brevet: **04.05.2016**
(21) Numéro de dépôt: 12750448.8
(22) Date de dépôt: 26.07.2012
(51) Int. Cl.: F16H 61/448, F16H 61/444, F16H 61/4043, B60K 17/356

(54) **DISPOSITIF DE TRANSMISSION HYDROSTATIQUE ASSURANT UNE BONNE MOTRICITE**
HYDROSTATISCHES GETRIEBE ZUR SICHERSTELLUNG VON GUTER STEUERBARKEIT
HYDROSTATIC TRANSMISSION DEVICE ENSURING GOOD DRIVEABILITY

(30) Priorité: 08.08.2011 FR 1157248
(43) Date de publication de la demande: 18.06.2014
(73) Titulaire: Poclain Hydraulics Industrie, 60410 Verberie (FR)
(72) Inventeur: PRIGENT, André, 60410 Saintines (FR); GOSTOMSKI, Romain, 60750 Choisy Au Bac (FR); HEREN, Jean, 60280 Margny Les Compiegne (FR)
(74) Mandataire: Duflos, Bertrand Guillaume
(86) Numéro de dépôt international: PCT/FR2012/051779
(87) Numéro de publication internationale: WO 2013/021113

(56) Documents cités:
- EP-A1- 2 216 194
- EP-A2- 1 004 469
- FR-A1- 2 940 671

## Description

L'invention concerne les dispositifs hydrauliques utilisés pour l'entrainement de véhicules ayant au moins un organe d'entraînement avant et au moins un organe d'entraînement arrière, et plus particulièrement de véhicules appelés à circuler sur des terrains difficiles comme des pentes montantes et descendantes, des voies glissantes, pierreuses, ou encore en dévers. Les organes d'entraînement peuvent être des roues, des chenilles, etc. Dans la suite de ce document pour simplifier il sera fait référence à des roues qui sont les organes d'entraînement les plus fréquents sur des véhicules, étant entendu que toute mention d'une roue devra être comprise comme étant également applicable à tout organe d'entraînement apte à assurer au moins en partie l'entraînement d'un véhicule.

Un exemple de dispositif hydraulique est donné par le document EP2216194.

De manière connue, pour assurer à des véhicules une bonne motricité y compris sur des terrains difficiles, on peut utiliser le dispositif dit 'Twin-Lock' (Twin-lock est une marque déposée de la société Poclain Hydraulics). Un dispositif 'Twin-lock' est défini ici comme un dispositif de transmission hydrostatique comportant :
- une pompe hydraulique avec deux orifices principaux ;
- un premier moteur hydraulique ;
- un deuxième moteur hydraulique comportant au moins un premier et un deuxième moteur élémentaire, chaque moteur élémentaire ainsi que le premier moteur présentant une première et une deuxième enceinte pour l'alimentation et l'échappement de fluide du moteur,
et dans lequel :
- la première enceinte de chacun des deux moteurs élémentaires du deuxième moteur peut être reliée à un premier orifice principal de la pompe ;
- la deuxième enceinte du premier moteur élémentaire du deuxième moteur et la première enceinte du premier moteur peuvent être reliées l'une à l'autre en série par une première conduite de série, la deuxième enceinte du premier moteur étant reliée au deuxième orifice principal de la pompe ;
- la deuxième enceinte du deuxième moteur élémentaire du deuxième moteur peut être reliée au deuxième orifice principal de la pompe ;
les liaisons étant effectives ou non en fonction du mode de fonctionnement du dispositif.

Le dispositif Twin-lock comprend donc deux circuits moteurs reliés en parallèle aux orifices principaux de la pompe, le premier circuit comprenant essentiellement le premier moteur élémentaire relié en série avec le premier moteur, et le second circuit comprenant essentiellement le deuxième moteur élémentaire.

Dans un dispositif Twin-lock, le deuxième moteur est un moteur distinct du premier moteur, c'est-à-dire qu'il comprend un organe de sortie mécaniquement indépendant en rotation de l'organe de sortie du premier moteur. Le premier et le deuxième moteurs sont en général attelés à des roues distinctes du véhicule.

Dans ce document, le fait que des composants soient « reliés » dans un mode de fonctionnement du dispositif signifie que dans ce mode de fonctionnement, ils sont mis en communication via des conduits, des valves et éventuellement d'autres composants hydrauliques mais sans cependant qu'aucune pompe ou aucun moteur ne soit interposé sur cette liaison.

Le dispositif Twin-lock est une solution connue et éprouvée pour l'entraînement d'un véhicule ayant au moins un organe d'entraînement avant et au moins un organe d'entraînement arrière. Il permet de synchroniser le ou les organes d'entraînement avant et arrière du véhicule, et d'éviter ainsi tout patinage dans la plupart des circonstances. Un exemple de dispositif Twin-lock est donné par le document EP 0 547 947.

Dans ce document, le terme 'une conduite de série' doit être compris comme une conduite qui ne comporte pas de dérivation (une légère soustraction ou un léger apport de fluide restant possible), du moins dans une configuration dite 'de synchronisation', dans laquelle les moteurs (principaux ou élémentaires) reliés par la conduite de série sont synchronisés. Le circuit peut cependant comporter des valves ou des équipements qui lui permettent d'être exploité dans d'autres configurations que la configuration de synchronisation indiquée précédemment.

La plupart des véhicules équipés de dispositifs Twin-lock sont prévus avec un mode de fonctionnement dit mode 'travail', dans lequel ils se déplacent à vitesse relativement lente, et un mode 'route', dans lequel ils se déplacent, sur route, à une vitesse beaucoup plus élevée. Comme l'entrainement de ces véhicules est assuré par les moteurs hydrauliques du dispositif Twin-lock, le passage du mode travail au mode route est obtenu principalement en bipassant l'un ou l'autre des circuits moteurs cités précédemment, ce qui a pour effet de réduire la cylindrée des moteurs entraînant les roues et donc d'augmenter la vitesse.

Le mode travail correspond naturellement au mode dans lequel l'ensemble des circuits moteurs (et notamment les deux moteurs élémentaires) sont utilisés pour produire un couple moteur. Inversement, le mode route correspond donc à un mode dans lequel au moins un des circuits moteurs, et donc au moins un des moteurs élémentaires du deuxième moteur est bipassé. Dans cette situation, la même pression est appliquée aux deux extrémités du circuit bipassé, si bien que le ou les moteurs de ce circuit ne produisent aucun couple.

La mise en bipasse d'un circuit moteur nécessite toutefois de prendre certaines précautions. En effet, si l'un des moteurs élémentaires est bipassé alors que la première enceinte du moteur élémentaire est reliée au premier orifice principal de la pompe, et si la pression de refoulement est appliquée à ce premier orifice principal de la pompe, alors la pression de refoulement s'applique également à la deuxième enceinte du moteur élémentaire bipassé. Or un moteur élémentaire ne peut fonctionner dans un tel mode (avec une pression élevée s'appliquant simultanément à ses deux enceintes d'alimentation/échappement) : le moteur élémentaire s'échauffe, se grippe, et se détériore rapidement.

Pour éviter ce problème dans les véhicules entraînés par des dispositifs Twin-lock, la haute pression de refoulement de la pompe est appliquée en mode travail (et donc de manière générale, dans le sens préférentiel de circulation du fluide) non pas aux premières enceintes des moteurs élémentaires du deuxième moteur, mais au contraire de l'autre côté, c'est-à-dire respectivement à la deuxième enceinte du premier moteur et à la deuxième enceinte du deuxième moteur élémentaire du deuxième moteur.

Par ailleurs, il a été constaté que sur de tels véhicules, certains problèmes de stabilité dans les pentes montantes peuvent survenir dans certaines conditions d'adhérence défavorables. En effet, lorsque la machine se trouve en forte pente, la machine se trouve délestée de l'avant et a donc une moindre capacité à transmettre un effort au sol par les roues avant. Celles-ci s'appuient donc sur les roues arrière en continu.

Cette capacité étant directement liée au poids du véhicule et à son coefficient d'adhérence, en cas de baisse brutale du coefficient d'adhérence (pierre qui roule sous la roue, etc.), le couple moteur se reporte brutalement sur la roue arrière correspondante. Cette augmentation brutale du couple sur la roue arrière engendre un moment de cabrage, qui conduit à son tour un délestage supplémentaire de la roue avant. Ce délestage supplémentaire de la roue avant diminue encore la capacité de la roue avant à transmettre en effort au sol et une nouvelle impulsion de pression vers la roue arrière est générée. Le véhicule subit alors un mouvement d'oscillations auto-entretenu, qui souvent ne peut être interrompu qu'avec l'arrêt complet du véhicule.

Différents dispositifs connus ont été proposés pour limiter ou éviter un tel comportement du véhicule. Ces dispositifs servent essentiellement à réduire le couple du ou des moteurs avant afin d'obtenir un effet anti-patinage.

Cependant les différentes solutions proposées n'ont jamais permis d'éliminer entièrement le risque d'oscillations indiqué précédemment.

Aussi, un premier objectif de l'invention est de fournir un dispositif hydraulique comprenant un circuit de type twin-lock, permettant à la fois d'assurer une bonne motricité et d'autoriser un mode 'route' en petite cylindrée et un mode 'travail' de plus grande cylindrée, le dispositif présentant de plus un comportement moteur stable, y compris en forte pente montante, et cela notamment lorsqu'une des roues subit une perte d'adhérence.

Cet objectif est atteint par un dispositif de transmission hydrostatique comportant :
- une pompe hydraulique avec deux orifices principaux ;
- un premier moteur hydraulique ;
- un deuxième moteur hydraulique comportant au moins un premier et un deuxième moteur élémentaire, chaque moteur élémentaire ainsi que le premier moteur présentant une première et une deuxième enceinte pour l'alimentation et l'échappement de fluide du moteur,
le dispositif présentant au moins deux modes de fonctionnement appelés mode 'travail'et mode 'route', dans lesquels :
- la deuxième enceinte du premier moteur élémentaire du deuxième moteur et la première enceinte du premier moteur sont reliées l'une à l'autre en série par une première conduite de série, la deuxième enceinte du premier moteur étant reliée au deuxième orifice principal de la pompe ; et
- la deuxième enceinte du deuxième moteur élémentaire du deuxième moteur est reliée au deuxième orifice principal de la pompe ;
dispositif dans lequel en mode 'travail', la première enceinte de chacun des deux moteurs élémentaires du deuxième moteur est reliée à un premier orifice principal de la pompe,
le dispositif présentant en outre des moyens d'isolement aptes en mode route à :
- isoler l'une de l'autre les premières enceintes du premier et du deuxième moteur élémentaire du deuxième moteur,
- mettre en communication l'une de celles-ci dite première enceinte d'alimentation avec le premier orifice principal de la pompe de manière à alimenter l'un des moteurs élémentaires du deuxième moteur, et
- mettre en communication l'autre de celles-ci dite première enceinte de bipasse avec le deuxième orifice principal de la pompe via un premier conduit de bipasse de manière à mettre en bipasse l'autre des moteurs élémentaires du deuxième moteur.

De manière implicite dans ce dispositif, la pompe doit être agencée de telle sorte que la pression de refoulement de la pompe puisse être appliquée au premier orifice de la pompe. C'est le cas notamment si la pompe est réversible.

L'invention permet d'alimenter le dispositif Twin-lock, contrairement à la pratique antérieure expliquée précédemment, non pas en appliquant la pression de refoulement de la pompe respectivement à la deuxième enceinte du premier moteur et à la deuxième enceinte du deuxième moteur élémentaire du deuxième moteur, mais au contraire aux premières enceintes des deux moteurs élémentaires.

Du fait que le dispositif permet l'alimentation en premier de la roue arrière du véhicule, lorsque celle-ci est entraînée par le deuxième moteur, le problème d'oscillations auto-entretenues rencontré dans les dispositifs Twin-lock antérieurs est évité.

Dans ces dispositifs antérieurs, comme les deux premières enceintes des deux moteurs élémentaires sont reliées conjointement au premier orifice principal de la pompe, ces deux enceintes en pratique communiquent à l'intérieur même du moteur, qui ne comporte donc qu'un unique raccord externe d'alimentation/échappement commun à ces deux premières enceintes.

L'invention suppose donc de modifier cet aménagement habituel du deuxième moteur d'un dispositif Twin-lock, en y intégrant des moyens d'isolement permettant en mode route d'isoler l'une de l'autre les premières enceintes des deux moteurs élémentaires, de manière à les mettre en communication séparément respectivement vers les deux orifices principaux de la pompe. Le deuxième moteur d'un dispositif selon l'invention est donc un moteur à quatre raccords externes (voire davantage), au lieu de trois sur les dispositifs Twin-lock traditionnels.

Deux agencements du dispositif sont possibles pour le mode route, selon la motricité voulue :
Dans un premier mode de réalisation, en mode route c'est le deuxième moteur élémentaire qui est bipassé. La première enceinte d'alimentation est alors la première enceinte du premier moteur élémentaire. Le premier moteur élémentaire et le premier moteur sont moteurs en mode route et assurent ainsi la synchronisation des roues via la première conduite de série.

Dans un deuxième mode de réalisation inversement, en mode route c'est le premier moteur élémentaire relié au premier moteur qui sont bipassés. La première enceinte d'alimentation est alors la première enceinte du deuxième moteur élémentaire. Le deuxième moteur élémentaire est alors le seul moteur du dispositif ; il n'y a donc pas de synchronisation des roues.

Par ailleurs, pour permettre une différence de vitesse élevée entre le mode route et le mode travail, il est souhaitable que le deuxième moteur comprenne non pas seulement deux moteurs élémentaires, mais trois moteurs élémentaires (voire davantage). Ainsi dans un mode de réalisation, le deuxième moteur comporte en outre un troisième moteur élémentaire présentant une première et une deuxième enceintes d'alimentation/échappement ;
- la première enceinte du troisième moteur élémentaire est reliée avec la première enceinte du premier moteur élémentaire ; et
- la deuxième enceinte du troisième moteur élémentaire est reliée au deuxième orifice principal de la pompe.

Dans ce mode de réalisation de préférence l'alimentation et l'échappement du deuxième moteur se font de préférence uniquement via quatre raccords externes d'alimentation/échappement.

Dans un dispositif selon l'invention, différents aménagements peuvent être envisagés pour améliorer les capacités de freinage du véhicule sur lequel le dispositif est implanté.

Tout d'abord, comme cela a été indiqué précédemment, en mode route le nombre de moteurs actifs est réduit, ce qui a priori réduit d'autant la capacité de freinage hydrostatique. Cependant selon un perfectionnement avantageux de l'invention, la présence du conduit de bipasse permet au prix d'une modification minime de disposer d'une capacité de freinage hydrostatique largement accrue. En effet il suffit pour cela que le dispositif comporte un réducteur de pression interposé sur le premier conduit de bipasse, qui empêche une élévation de pression dans la partie de celui-ci qui est reliée au deuxième orifice principal de la pompe. En situation de freinage, de manière connue la pression s'inverse dans les circuits, la pression la plus élevée régnant au deuxième orifice principal de la pompe. Dans ces circonstances, alors que la pression régnant au deuxième orifice principal de la pompe est plus élevée que celle régnant au premier orifice, la chute de pression due au réducteur de pression conduit à faire régner dans la première enceinte de bipasse une pression relativement faible (déterminée par le réglage du réducteur de pression). La différence de pression ainsi créée aux bornes du moteur élémentaire alimenté par la première enceinte de bipasse permet donc que ce dernier moteur délivre pour le freinage un couple de freinage substantiel, qui s'ajoute au couple de freinage délivré par l'autre moteur élémentaire.

D'autre part en condition de freinage, la présence d'un différentiel de pression inverse aux bornes des moteurs élémentaires suscite un risque, si les roues passent sur une surface glissante ou pierreuse, de patinage et donc d'inversion du sens de rotation des roues : Une des roues risque de se mettre à tourner en sens inverse de la marche du véhicule. Pour éviter cela, une possibilité consiste à ce que le dispositif comporte un clapet anti-retour interposé sur le premier conduit de bipasse, qui empêche la circulation de fluide dans ce conduit en provenance de la première enceinte de bipasse. Ce clapet anti-retour bloque donc toute rotation en sens inverse de la marche du moteur élémentaire relié au premier conduit de bipasse.

Le dispositif selon l'invention peut être utilisé pour la motorisation de différents véhicules, comportant différents nombres d'organes d'entraînement. Jusqu'à présent, seul un organe d'entraînement avant, et un organe d'entraînement arrière ont été cités.

Dans un mode de réalisation, le dispositif comporte en outre :
- un troisième moteur hydraulique , comportant au moins un premier et un deuxième moteur élémentaire, chaque moteur élémentaire présentant une première et une deuxième enceinte pour l'alimentation et l'échappement de fluide du moteur ;
dispositif dans lequel, en mode travail comme en mode route :
- la deuxième enceinte du deuxième moteur élémentaire du troisième moteur est reliée au deuxième orifice principal de la pompe ;
en mode 'travail', la première enceinte de chacun des deux moteurs élémentaires du troisième moteur est reliée au premier orifice principal de la pompe ;
les moyens d'isolement sont aptes, en mode 'route', à :
- isoler l'une de l'autre les premières enceintes du premier et du deuxième moteur élémentaire du troisième moteur, et simultanément
- mettre en communication l'une de celles-ci dite première enceinte d'alimentation du troisième moteur avec le premier orifice principal de la pompe de manière à alimenter l'un des moteurs élémentaires, et
- mettre en communication l'autre de celles-ci dite première enceinte de bipasse du troisième moteur avec le deuxième orifice principal de la pompe via un deuxième conduit de bipasse de manière à bipasser l'autre des moteurs élémentaires.

Le dispositif permet ainsi l'entraînement de trois roues ou organes d'entraînement distincts.

Une première variante est prévue pour un véhicule ayant seulement trois roues, dans le dispositif, la deuxième enceinte du premier moteur élémentaire du troisième moteur et la première enceinte du premier moteur sont reliées l'une à l'autre en série par une deuxième conduite de série.

Une deuxième variante est prévue pour un véhicule ayant quatre roues. Le dispositif comporte alors en outre un quatrième moteur présentant une première et une deuxième enceinte pour l'alimentation et l'échappement de fluide du moteur, et la deuxième enceinte du premier moteur élémentaire du troisième moteur et la première enceinte du quatrième moteur sont reliées l'une à l'autre en série par une deuxième conduite de série, la deuxième enceinte du quatrième moteur étant reliée au deuxième orifice principal de la pompe.

Dans les dispositifs comportant un premier et un troisième moteur, pour améliorer le comportement en condition de freinage, différents perfectionnements peuvent être envisagés :
- Le dispositif peut comporter un diviseur de débit. Ce diviseur peut être agencé notamment de deux manières :
   Dans un mode de réalisation, le diviseur de débit comporte deux voies d'entrée et une voie de sortie ; les deux voies d'entrée sont reliées respectivement aux deuxièmes enceintes du deuxième moteur élémentaire du deuxième et du troisième moteur, et la voie de sortie est reliée au deuxième orifice principal de la pompe, le diviseur de débit étant agencé de manière à imposer un débit égal à travers chacune de ses deux voies d'entrée.

Dans un mode de réalisation, le diviseur de débit comporte une voie d'entrée et deux voies de sortie ; les deux voies de sortie sont reliées en mode travail aux premières enceintes du premier et du deuxième moteur élémentaire respectivement du deuxième et du troisième moteur, et la voie d'entrée est reliée au premier orifice principal de la pompe, le diviseur de débit étant agencé de manière à imposer un débit égal à travers chacune de ses deux voies de sortie.

Dans les deux cas, le diviseur de débit impose aux deux roues (entraînées respectivement par les deuxième et troisième moteurs) de tourner exactement à la même vitesse : Cela empêche donc en particulier toute rotation dans le sens inverse de la marche de l'une des roues.

Le comportement en situation de freinage peut être amélioré également dans le cas où le dispositif comporte un circuit de valve d'échange avec deux voies d'entrée et une voie de sortie, les deux voies d'entrée étant reliées aux deux orifices principaux de la pompe, la voie de sortie étant reliée à un réservoir sans surpression, le circuit de valve d'échange étant apte à diriger vers le réservoir sans surpression un fluide provenant de celui des orifices principaux de la pompe qui est à la pression la plus basse, si la pression de ce fluide excède une valeur prédéterminée. Un tel circuit sert à faire sortir du fluide du circuit fermé, principalement afin de lui permettre de se refroidir en passant dans le réservoir sans surpression.

Le comportement en situation de freinage d'un dispositif comportant un tel circuit est amélioré si le circuit comporte des moyens de blocage de valve d'échange activables, les moyens de blocage étant aptes à empêcher l'évacuation de fluide par la pompe lorsqu'ils sont activés. Les moyens de blocage sont activés naturellement en situation de freinage. Leur activation empêche la sortie de fluide du circuit fermé via le circuit de valve d'échange ; par suite, cela impose que le débit de fluide transitant par la pompe reste relativement important, ce qui contribue au maintien d'une certaine vitesse des roues et réduit ainsi le risque de blocage de celles-ci.

Enfin, l'invention est de préférence intégrée dans un engin mobile comportant un organe de déplacement arrière et un organe de déplacement avant, et un dispositif tel que défini précédemment. Dans l'engin mobile de préférence, le premier moteur est attelé à l'organe de déplacement avant ; et le deuxième moteur est attelé à l'organe de déplacement arrière. Les moteurs peuvent également être attelés de manière inverse aux organes de déplacement.

L'invention sera bien comprise et ses avantages apparaîtront mieux à la lecture de la description détaillée qui suit, de modes de réalisation représentés à titre d'exemples non limitatifs. La description se réfère aux dessins annexés, qui sont des vues schématiques représentant des dispositifs selon l'invention dans différents modes de réalisation :
- Figure 1 : configuration de base avec seulement deux moteurs ;
- Figure 2: configuration avec quatre moteurs entraînant quatre roues ;
- Figures 3, 4 et 5 : configurations avec respectivement quatre moteurs, et trois moteurs, le troisième moteur étant soit un moteur simple (fig4.), soit un moteur double (fig.5).
- La figure 6 enfin présente une variante d'une valve du circuit de la figure 4.

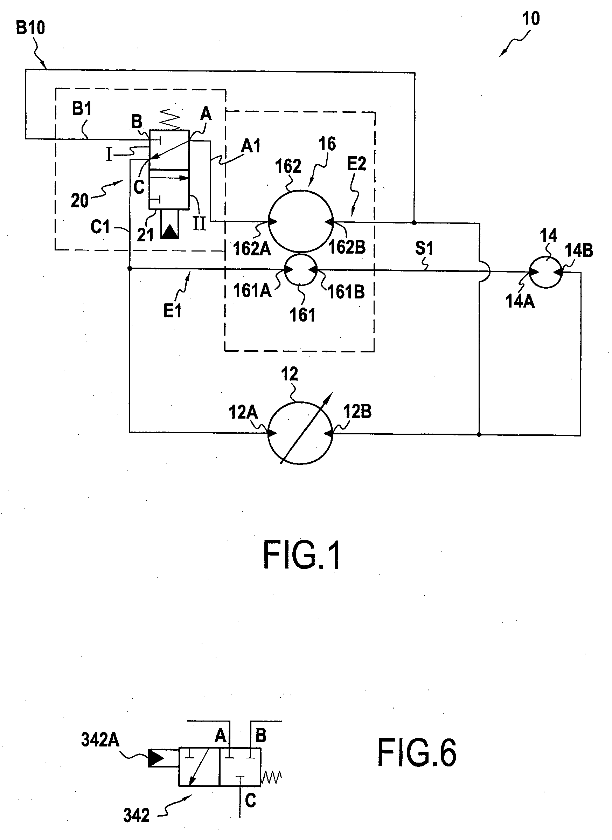

En faisant référence à la figure 1, un dispositif 10 de transmission hydrostatique selon l'invention dans un premier mode de réalisation va maintenant être décrit.

On suppose ici que ce dispositif 10 est implanté sur un véhicule (non représenté) comportant au moins une roue avant et une roue arrière, pour assurer l'entraînement de celui-ci. Dans ce but, le dispositif 10 comporte une pompe hydraulique 12, un premier moteur hydraulique 14 et un deuxième moteur hydraulique 16. De manière connue la pompe est prévue pour être entraînée par l'arbre de sortie d'un moteur à combustion interne (non représenté). Naturellement, l'invention aurait également pu être présentée dans un mode de réalisation dans lequel la pompe est entraînée par un moteur électrique.

La pompe 12 est une pompe réversible à débit variable présentant deux orifices principaux 12A et 12B. Le premier orifice 12A est l'orifice de refoulement de la pompe en fonctionnement normal de celle-ci.

Le premier moteur 14 est un moteur simple.

Le deuxième moteur 16 est un moteur multiple, qui comporte un premier (161) et un deuxième (162) moteur élémentaire. Les moteurs élémentaires 161 et 162 ainsi que le premier moteur 14 présentent respectivement de premières enceintes 161A, 162A, 14A et de deuxièmes enceintes 161B, 162B, 14B pour l'alimentation et l'échappement de fluide du moteur.

Aux orifices 12A et 12B de la pompe 12 sont raccordés en parallèle un premier circuit E1 constitué par le premier moteur élémentaire 161 et le premier moteur 14, et un deuxième circuit E2 constitué essentiellement par le deuxième moteur élémentaire 162, circuits qui ensemble forment un circuit fermé de circulation du fluide.

Par suite, dans le premier circuit E1, la seconde enceinte 161B du second moteur élémentaire 161 est reliée par une conduite de série S1 à la première enceinte 14A du premier moteur 14. De plus, la deuxième enceinte (14B) du premier moteur et la deuxième enceinte 162B du deuxième moteur élémentaire 162 sont reliées au deuxième orifice principal (12B) de la pompe 12.

Le moteur 16 présente quatre raccords externes d'alimentation/échappement de fluide. Ces raccords sont reliés respectivement aux deux enceintes du premier et du deuxième moteur élémentaire et portent les mêmes références que celles-ci. On note en particulier que dans le moteur 16 les différentes enceintes des deux moteurs élémentaires sont toutes deux à deux isolées du fait de l'agencement du moteur 16. Celui-ci inclut dans ce but des moyens d'isolement en particulier entre les enceintes 161A et 162A.

En outre, le dispositif 10 présente des moyens d'isolement 20 aptes, selon le mode de fonctionnement, à isoler ou non l'une de l'autre les premières enceintes 161A,162A.

La première enceinte 161A du premier moteur élémentaire est reliée de manière permanente au premier orifice principal 12A de la pompe 12.

Inversement, la première enceinte 162A du deuxième moteur élémentaire 162 est reliée à l'un ou l'autre des orifices 12A ou 12B en fonction de la position d'un distributeur commandable 21. Par conséquent la première enceinte 161A du deuxième moteur élémentaire 162 constitue la première enceinte d'alimentation au sens de l'invention, alors que la première enceinte 162A du deuxième moteur élémentaire 162 constitue la première enceinte de bipasse.

Les moyens d'isolement sont agencés de manière à permettre de relier sélectivement l'enceinte 162A à l'orifice 12A ou 12B. En effet 2 les moyens d'isolement comportent le distributeur commandable 21 à deux positions, qui est agencé de manière à permettre de relier sélectivement la première enceinte de bipasse 162A à l'un ou à l'autre des orifices de la pompe 12A ou 12B selon que le dispositif est en mode travail ou en mode route.

Ce distributeur 21 comporte trois voies, à savoir une voie aval A reliée au premier orifice 162A du deuxième sous-moteur (par un conduit A1) ; et deux voies amont B et C, reliées respectivement aux deux orifices principaux de la pompe 12A,12B par deux conduits de liaison B10 et C1.

Dans ce mode de réalisation, le conduit B10 comporte une unique partie B1.

Le distributeur 21 présente en outre deux positions I et II :
En position I, le dispositif 10 fonctionne en mode travail : les voies A et C sont mises en communication, la voie B étant isolée, de telle sorte que via le conduit C1, l'enceinte 162A est mise en communication avec l'orifice 12A de la pompe. La pression de refoulement de la pompe, qui s'applique à son orifice 12A, s'applique donc dans les deux enceintes 161A et 162A. Les deux circuits E1 et E2 sont actifs, tous les moteurs participent à l'entraînement du véhicule.
En position II, le dispositif 10 fonctionne en mode route : les voies A et B sont mises en communication, la voie C étant isolée, si bien que le deuxième moteur élémentaire 162 est bipassé. Seul le premier circuit E1 contribue donc à l'entraînement du véhicule.

Ainsi, l'agencement du dispositif 10 permet d'assurer le bipasse du deuxième circuit E2 et cela de manière saine, c'est-à-dire sans que le moteur élémentaire 162 ne subisse simultanément dans ses deux enceintes la pression (élevée) de refoulement de la pompe 12.

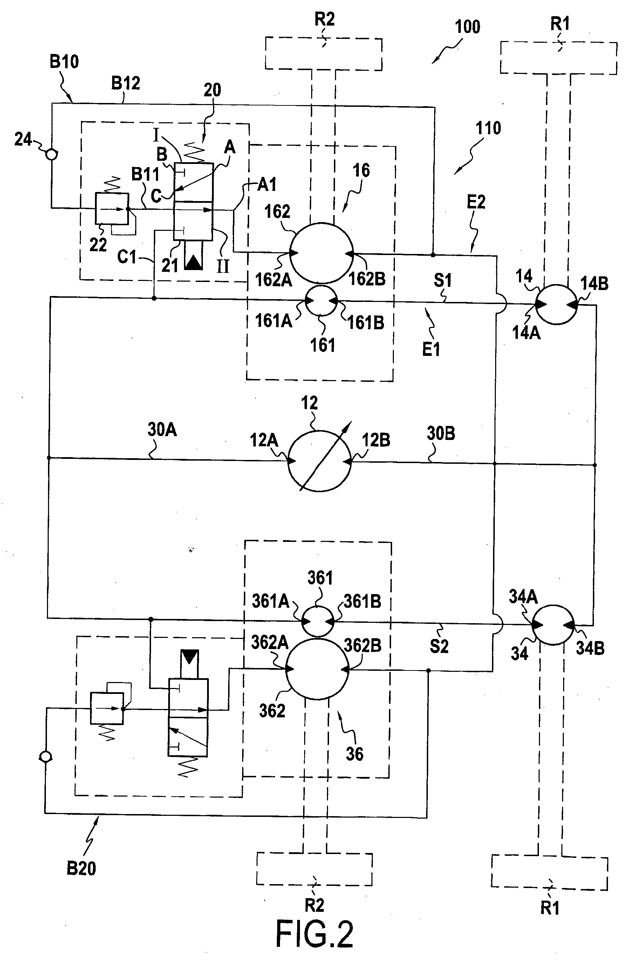

La figure 2 présente un véhicule 100 sur lequel un dispositif de transmission hydrostatique 110 selon l'invention est implanté.

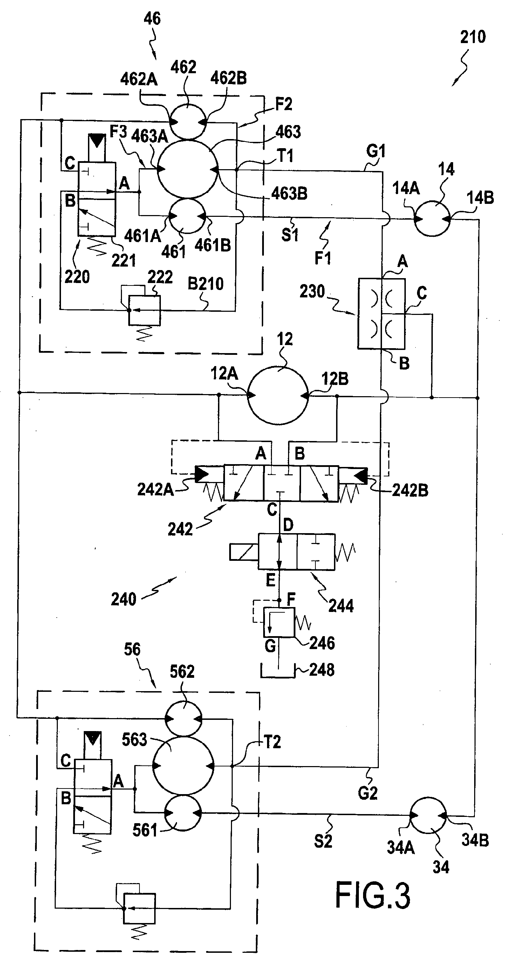

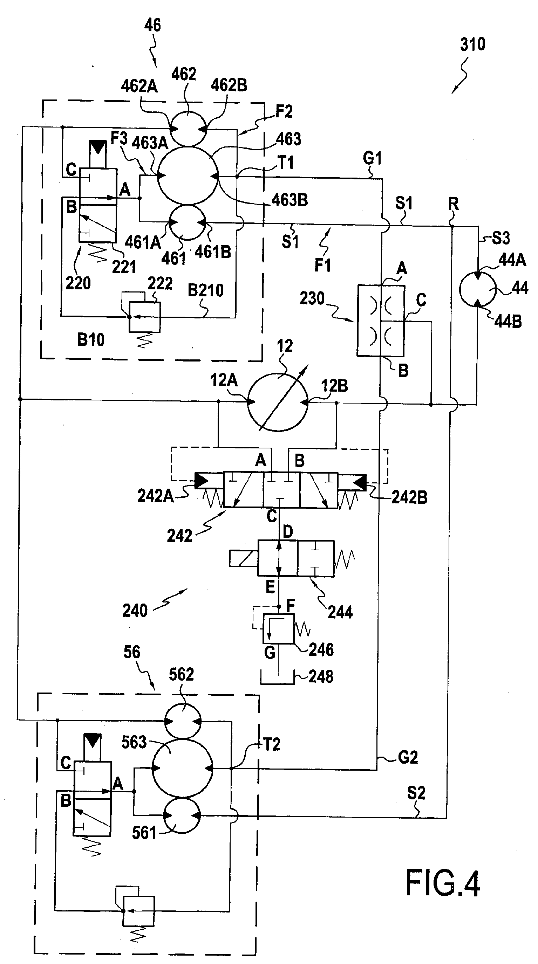

Dans cette figure comme dans les figures 3 et 4, les éléments identiques ou similaires à ceux du premier mode de réalisation, ou encore ayant la même fonction, portent le même signe de référence et ne sont pas décrits à nouveau.

Le véhicule 100 est un véhicule à quatre roues motrices dont deux roues avant R1 et deux roues arrière R2. Ses roues sont entraînées par le dispositif 110 qui comporte un premier et un deuxième moteur 14 et 16 identiques à ceux du dispositif 10, ainsi qu'un troisième moteur 36 et un quatrième moteur 34.

Les premier et quatrième moteurs 14 et 34 sont attelés respectivement aux roues avant R1 gauche et droite. Les deuxième et troisième moteurs 16 et 36 sont attelés respectivement aux roues arrière R2 gauche et droite.

Le dispositif 110 est agencé de manière symétrique pour les deux côtés du véhicule. La pompe 12 et les conduits 30A et 30B reliés aux orifices 12A et 12B de la pompe ne sont pas dupliqués ; inversement, tous les autres composants du dispositif 110 sont dupliqués.

Etant donné que le dispositif 110 a une architecture symétrique entre la gauche et la droite, seule la partie 'gauche' du dispositif 110 va maintenant être décrite, à savoir celle qui contient les composants qui desservent le côté gauche du véhicule (et notamment les premier et deuxième moteur 14 et 16).

On note cependant que la deuxième enceinte 361B du premier moteur élémentaire 361 du troisième moteur et la première enceinte 34A du quatrième moteur 34 sont reliées l'une à l'autre en série par une deuxième conduite de série S2, la deuxième enceinte 34B du quatrième moteur étant reliée au deuxième orifice principal 12B de la pompe 12.

La partie gauche du dispositif 110 (en incluant les composants communs aux parties gauche et droite, à savoir essentiellement la pompe 12 et les conduits 30A et 30B) est identique au dispositif 10, sauf que deux composants supplémentaires ont été ajoutés, à savoir un réducteur de pression 22 et un clapet anti-retour 24.

Le réducteur de pression 22 est interposé sur le conduit B10, qu'il sépare en une partie 'amont' B11 qui s'étend de la voie B du distributeur 21 au réducteur de pression 22, et une partie 'aval' B12 qui s'étend du réducteur de pression 22 à l'orifice 12B.

Pour mieux faire comprendre le rôle du réducteur de pression 22, le distributeur 21 a été représenté en mode route (position II). Dans ce mode de fonctionnement, en marche avant normale (c'est-à-dire lorsque les moteurs ont un rôle de moteurs et non de pompes), le fluide aux orifices 162A et 162B du deuxième moteur élémentaire 162 est porté à la pression de l'orifice 12B de la pompe (pression d'admission de la pompe, de l'ordre de 20 Bars environ habituellement).

Inversement en cas de freinage, les moteurs 14 et 16 fonctionnent en tant que pompes et font s'élever la pression dans l'orifice 12B de la pompe. En l'absence de réducteur de pression 22, le moteur élémentaire 162 resterait en situation de bipasse et fournirait un couple de sortie nul.

Or, le réducteur 22 est interposé sur le conduit de bipasse B10 (premier conduit de bipasse). Ce réducteur reste sans effet sur le fluide tant que la pression dans la partie aval B12 du conduit de bipasse B10 (partie située en aval du réducteur 22) reste inférieure à une pression prédéterminée, de l'ordre de 60 Bars. Inversement, dès que cette pression tend à dépasser cette valeur, le réducteur limite le débit qui le traverse, empêchant ainsi la pression de dépasser la valeur de 60 Bars dans la partie de conduit B12.

Le réducteur 22 permet donc à une différence de pression importante de s'établir entre la deuxième enceinte 162B du deuxième moteur élémentaire (reliée au deuxième orifice principal de la pompe) et la première enceinte 162A. Il permet donc au deuxième moteur élémentaire d'appliquer un couple de freinage significatif à la roue arrière gauche.

Enfin, le clapet anti-retour 24 disposé sur le conduit B12 empêche que le fluide ne circule dans ce conduit de l'enceinte 162A vers l'enceinte 162B via le distributeur 21 et le conduit B10. Aussi, le clapet 24 empêche toute rotation du moteur 16 et donc de la roue à laquelle le moteur est connecté dans le sens inverse au sens normal (dans lequel le fluide traverse le moteur 16 de la première enceinte vers la deuxième enceinte).

La figure 3 représente un dispositif 210 de transmission hydrostatique dans un troisième mode de réalisation de l'invention. Le dispositif 210 est agencé de la même manière pour la partie gauche et la partie droite du véhicule sur lequel il est agencé ; aussi, la description sera faite seulement pour les composants utilisés pour la partie gauche du véhicule.

Le dispositif 210 est sensiblement identique au dispositif 110, hormis certaines différences qui sont expliquées ci-dessous.

La première différence est que dans le dispositif 210, les moteurs 46 et 56 entraînant les roues arrière comportent chacun trois moteurs élémentaires (461,462,463 ; 561,562,563) au lieu de deux dans les moteurs 16 et 36. Chacun de ces moteurs élémentaires comporte deux enceintes d'alimentation/échappement dont la référence est celle du moteur élémentaire suivie de 'A' pour la première enceinte, qui est l'enceinte d'alimentation en avance normale du véhicule, ou 'B' pour la deuxième enceinte, qui est l'enceinte d'échappement en avance normale du véhicule.

Les moteurs élémentaires 461 et 462 sont le premier et le deuxième moteur élémentaire au sens de l'invention. Le moteur 463 est donc un moteur élémentaire additionnel par rapport aux modes de réalisation précédents, qui permet d'obtenir un écart de cylindrée, et donc de vitesse, plus important entre le mode travail et le mode route.
- Les premières enceintes 461A et 463A des moteurs 461 et 463 sont reliées l'une à l'autre et reliées à la voie A d'un distributeur 221 à deux positions qui fait partie de moyens d'isolement 220 au sens de l'invention.
- La deuxième enceinte 461B du moteur 461 est reliée en série par une conduite de série S1 à la première enceinte 14A du premier moteur 14.
- La deuxième enceinte 463B du moteur 463 est reliée à un embranchement T1 situé dans le moteur 46, qui permet de diriger le fluide via un diviseur de débit 230 (décrit plus loin) jusqu'à l'orifice 12B de la pompe 12.
- Les première et deuxième enceintes 462A et 462B du moteur 462 sont reliées respectivement au premier orifice 12A de la pompe 12 et à l'embranchement T1 cité précédemment.

Ainsi, les moteurs élémentaires 462 et 463 sont agencés sur deux circuits F2 et F3 reliés en parallèle aux orifices principaux de la pompe, alors que c'est la réunion du moteur élémentaire 461 et du premier moteur 14 reliés en série qui est également relié en parallèle aux orifices principaux de la pompe et forme le troisième circuit F1.

Le circuit F2 relie en permanence (c'est-à-dire aussi bien en mode route qu'en mode travail) les orifices principaux de la pompe.

En revanche, du fait du distributeur 221, les circuits F1 et F3 peuvent être bipassés ce qui permet de mettre le dispositif en mode route. En effet, le distributeur 221 comporte une voie amont A (reliée aux enceintes 461A et 463A), une voie aval B reliée à l'embranchement T1 via un conduit de bipasse B210, et une voie aval C reliée à l'orifice 12A de la pompe. Le distributeur 221 présente deux positions, dans lesquelles il permet de mettre en communication la voie A avec l'un ou l'autre des orifices principaux de la pompe via les voies B ou C respectivement.

Lorsque la voie A est mise en communication avec l'orifice 12A (orifice de refoulement de la pompe), le dispositif est en mode travail. La pression de refoulement s'applique aux trois premières enceintes des moteurs élémentaires du moteur 16 et les trois circuits F1 à F3 sont actifs.

Lorsqu'inversement la voie A est mise en communication avec l'orifice 12B, le dispositif est en mode route. Les circuits F1 et F3 sont bipassés, et seul le moteur 462 du circuit F2 sert à l'entraînement du véhicule.

On note que dans ce mode de réalisation, la première enceinte d'alimentation est la première enceinte 462A du deuxième moteur élémentaire 462. C'est différent de l'agencement du dispositif 10 (figure 1), dans lequel la première enceinte d'alimentation était la première enceinte 161A du premier moteur élémentaire 161.

Comme dans le dispositif 110, le dispositif 210 comporte un réducteur de pression 222, interposé sur le conduit de bipasse B210.

Une autre spécificité du dispositif 210 est le diviseur de débit 230. Celui-ci sert à éviter qu'une roue ne se mette malencontreusement à tourner en sens inverse pendant un freinage, le plus souvent dans une descente, rendant le dispositif incontrôlable.

Comme cela a été indiqué, les deuxièmes enceintes 462B et 463B du deuxième et du troisième moteur élémentaire 462 et 463 du moteur 46, ainsi que la voie B du distributeur 221, sont reliées à l'embranchement T1 du moteur et de là, à l'orifice 12B de la pompe.

Dans ce but, l'embranchement T1 est relié par un conduit G1 à une voie d'entrée A du diviseur de débit 230. Un agencement symétrique existe dans le moteur arrière droit 56, qui présente un embranchement T2 relié par un conduit G2 à une voie d'entrée B du diviseur de débit 230.

Le diviseur de débit 230 présente une troisième voie C permettant la sortie de fluide vers l'orifice 12B de la pompe auquel elle est reliée.

Le rôle du diviseur de débit 230 est le suivant :

Le diviseur de débit 230 impose aux débits traversant ses voies A et B d'être égaux. Les débits dans les conduits G1 et G2, et par conséquent dans les moteurs 46 et 56, sont donc astreints à être égaux. Par conséquent, en situation de freinage, une situation dans laquelle une roue arrière tournerait en sens inverse du sens de marche normale (sous l'effet du couple de freinage du moteur), l'autre roue tournant en sens normal, est exclue. Par conséquent, la possibilité pour une roue de se mettre à tourner en sens inverse du sens de la marche lors d'une situation de freinage est quasiment impossible, le couple d'entraînement de l'autre roue étant à peu près toujours nettement supérieur au couple de freinage inverse appliqué par le ou les moteurs.

Une spécificité supplémentaire du dispositif 210 est lié à l'agencement et au fonctionnement d'un circuit de valve d'échange 240 qui est intégré au dispositif 210. L'utilisation d'un circuit de valve d'échange dans un dispositif Twin-lock est connue en soi. Un tel circuit comporte deux voies d'entrée A et B reliées respectivement aux deux orifices 12A et 12B de la pompe, et une voie de sortie E reliée à un réservoir sans surpression (maintenu sensiblement à la pression atmosphérique) 248. En l'occurrence, le circuit 240 comporte une valve d'échange 242 à trois positions commandée par deux chambres de commande hydrauliques antagonistes 242A et 242B, une électrovalve de blocage 244 commandable constituant les moyens de blocage précités du circuit de valve d'échange, et un limiteur de pression 246. Les voies d'entrées A et B du dispositif 240 sont les voies d'entrée de la valve d'échange 242.

Les chambres 242A et 242B sont reliées respectivement aux orifices 12A et 12B de la pompe. Ainsi les pressions relatives du fluide dans ces orifices imposent la position de la valve 242 : Si elles sont égales, la valve 242 est en position médiane et isole les orifices. Sinon, la valve 242 met l'orifice de la pompe dont la pression est la plus faible en liaison avec sa voie de sortie C reliée à la voie d'entrée D de la valve 244.

En temps normal, cette valve 244 est passante et met en communication sa voie d'entrée D avec sa voie de sortie E reliée à la voie d'entrée F du limiteur de débit 246. Dès lors que la pression dans la voie d'entrée F du limiteur 246 excède la pression de tarage de celui-ci, celui-ci évacue le fluide depuis cette voie F vers le réservoir sans surpression 248, via sa voie de sortie G qui constitue la voie de sortie G du circuit de valve d'échange 240. Ainsi en temps normal, le circuit de valve d'échange évacue une partie du fluide circulant dans le circuit fermé principal vers le réservoir 248, ce fluide étant alors réinjectée dans le circuit fermé par une pompe de gavage non représentée. Cela entraîne un refroidissement forcé du fluide circulant dans le circuit fermé.

En revanche en situation de freinage, la valve 244 est activée et placée dans une position d'isolement, dans laquelle elle empêche toute évacuation de fluide de la valve 242 vers le réservoir 248. Ainsi avantageusement, la valve 244 constitue des moyens activables 244 de blocage de la valve d'échange 240, qui sont aptes à empêcher l'évacuation de fluide par la pompe lorsqu'ils sont activés. La valve 244 est activée pendant les phases de freinage car pendant ces phases, de manière connue il y a risque de blocage des roues. Grâce à la valve 244 (et notamment mais pas nécessairement, en combinaison avec le diviseur de débit 230), la totalité du fluide refoulé par la pompe est contraint de traverser les moteurs : cela force donc les roues à avoir une certaine vitesse, et constitue par conséquent et avantageusement un dispositif anti-blocage des roues.

La figure 4 présente une variante 310 du dispositif 210 de la figure 3.

La différence entre le dispositif 310 et le dispositif 210 est que le dispositif 310 est agencé pour l'entraînement de trois roues et non de quatre roues. Dans ce but, au lieu de comporter un premier et un quatrième moteur (14 et 34) à l'avant pour l'entraînement des roues avant, il ne comporte qu'un seul moteur à l'avant, le moteur 44.

Dans le dispositif 110, les conduites de série S1 et S2 des circuits E1 et E2 étaient reliées respectivement aux premières enceintes 14A et 34A des premier et quatrième moteur 14 et 34. A contrario dans le dispositif 210, les conduites de série S1 et S2 sont toutes deux reliées, via un embranchement de jonction R et un tronçon commun S3, à la première enceinte 44A du moteur 44, la deuxième enceinte 44B étant reliée à l'orifice 12B de la pompe.

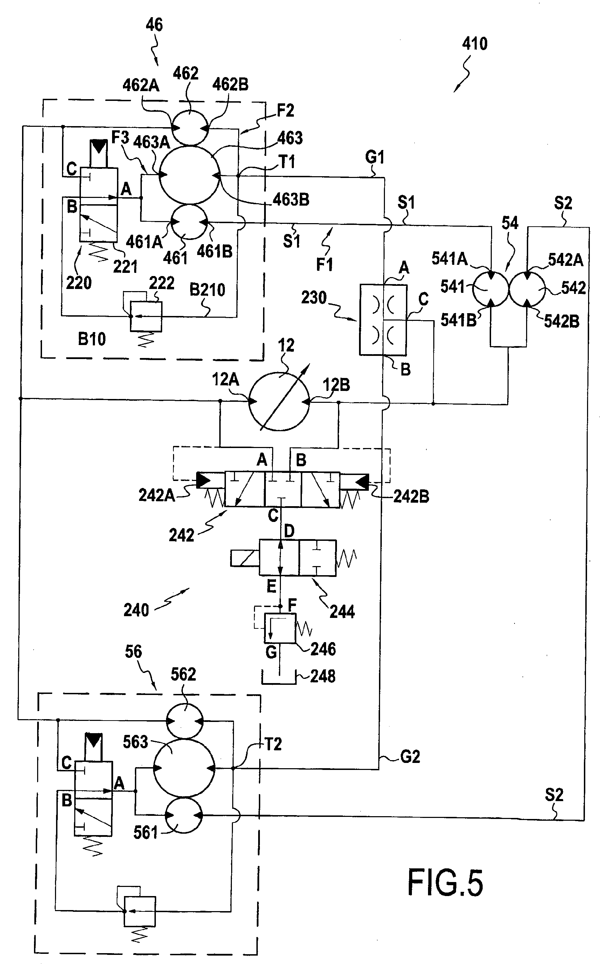

La figure 5 présente une variante 410 du dispositif 310 de la figure 4.

La différence entre le dispositif 410 et le dispositif 310 réside essentiellement dans le type de moteur utilisé pour l'entraînement de la roue avant. En effet, au lieu que la roue avant soit entraînée par un moteur simple tel que le moteur 44 du dispositif 310, dans le dispositif 410 la roue avant est entraînée par un moteur double 54. Ce moteur comprend deux moteurs élémentaires 541 et 542. Les orifices d'alimentation 541A et 542A de ces deux moteurs élémentaires sont reliés respectivement aux deuxièmes enceintes 461B et 561B des moteurs élémentaires 461 et 561, par les conduites de série S1 et S2. Les orifices d'échappement 541B et 542B des deux moteurs élémentaires sont reliés l'un à l'autre et reliés à l'orifice d'admission 12B de la pompe. Ce mode de réalisation illustre le fait que le premier moteur hydraulique au sens de l'invention au lieu d'être un moteur simple, peut être un moteur élémentaire faisant partie d'un moteur multiple, comme c'est le cas du moteur élémentaire 541 au sein du moteur 54.

La figure 6 enfin présente une version alternative 342 de la valve 242. La valve 342 permet comme la valve 242 de réaliser conjointement avec les valves 244 et 246 la fonction d'échange du circuit de valve d'échange 240, lorsque la pression régnant à l'orifice de refoulement 12A de la pompe est suffisamment haute. La valve 342 est sauf mention contraire est identique à la valve 242.

La spécificité de la valve 342 est qu'elle présente seulement deux positions. Son tiroir mobile en effet est commandé seulement par la pression d'une chambre hydraulique, la chambre 342A. La valve 342 ne présente pas de deuxième chambre de commande hydraulique. Par suite, lorsque la pression à l'orifice d'admission 12B de la pompe s'élève, que ce soit en marche arrière, en descente, ou pendant un freinage, la valve 342 se place en position d'isolement et empêche tout échange de fluide. Naturellement, ce mode de réalisation n'est utilisable que dans la mesure où pendant ces phases, le fluide hydraulique n'est pas sujet à de trop fortes élévations de température susceptibles d'endommager certains composants. En effet pendant ces phases, comme indiqué précédemment, le refroidissement du fluide n'est pas réalisé par le circuit de valve d'échange 240.

## Revendications

1. Dispositif (10) de transmission hydrostatique comportant :
- une pompe hydraulique (12) avec deux orifices principaux (12A, 12B) ;
- un premier moteur hydraulique (14,44,54) ;
- un deuxième moteur hydraulique (16) comportant au moins un premier (161) et un deuxième (162) moteur élémentaire, chaque moteur élémentaire ainsi que le premier moteur présentant une première et une deuxième enceinte pour l'alimentation et l'échappement de fluide du moteur,
le dispositif présentant au moins deux modes de fonctionnement appelés mode 'travail' et mode 'route', dans lesquels :
- la deuxième enceinte (161B) du premier moteur élémentaire (161) du deuxième moteur et la première enceinte (14A) du premier moteur (14) sont reliées l'une à l'autre en série par une première conduite de série (S1), la deuxième enceinte (14B) du premier moteur étant reliée au deuxième orifice principal (12B) de la pompe ; et
- la deuxième enceinte du deuxième moteur élémentaire (162) du deuxième moteur est reliée au deuxième orifice principal de la pompe ;
dispositif dans lequel en mode 'travail', la première enceinte (161A,162A) de chacun des deux moteurs élémentaires du deuxième moteur est reliée à un premier orifice principal (12A) de la pompe ;
le dispositif **se caractérisant en ce qu'**il présente des moyens d'isolement (20) aptes, en mode 'route', à :
- isoler l'une de l'autre les premières enceintes (161A,162A) du premier et du deuxième moteur élémentaire du deuxième moteur,
- mettre en communication l'une de celles-ci dite première enceinte d'alimentation (161A) avec le premier orifice principal de la pompe de manière à alimenter l'un des moteurs élémentaires du deuxième moteur, et
- mettre en communication l'autre de celles-ci dite première enceinte de bipasse (162A) avec le deuxième orifice principal de la pompe (12B) via un premier conduit de bipasse (B10) de manière à mettre en bipasse l'autre (162) des moteurs élémentaires du deuxième moteur (16).

2. Dispositif selon la revendication 1, dans lequel les moyens d'isolement comportent un distributeur commandable (21) à deux positions, agencé de manière à permettre de relier sélectivement la première enceinte de bipasse (162A) à l'un ou à l'autre des orifices de la pompe selon que le dispositif est en mode travail ou en mode route.

3. Dispositif selon la revendication 2, dans lequel le distributeur (21) comporte trois voies, à savoir une voie aval (A) reliée au premier orifice (162B) du deuxième sous-moteur ; et deux voies amont (B,C) reliées respectivement aux deux orifices principaux de la pompe (12A,12B) par deux conduits de liaison (B10,C1).

4. Dispositif selon l'une quelconque des revendications 1 à 3, dans lequel la première enceinte d'alimentation est la première enceinte (161A) du premier moteur élémentaire.

5. Dispositif selon l'une quelconque des revendications 1 à 3, dans lequel la première enceinte d'alimentation est la première enceinte (162A) du deuxième moteur élémentaire.

6. Dispositif selon l'une quelconque des revendications 1 à 5, dans lequel :
- le deuxième moteur (46) comporte en outre un troisième moteur élémentaire (463) présentant une première et une deuxième enceintes d'alimentation/échappement (463A,463B) ;
- la première enceinte (463A) du troisième moteur élémentaire est reliée avec la première enceinte (461A) du premier moteur élémentaire ; et
- la deuxième enceinte (463B) du troisième moteur élémentaire est reliée au deuxième orifice principal de la pompe (12B).

7. Dispositif selon l'une quelconque des revendications 1 à 6, comportant en outre un réducteur de pression (22) interposé sur le premier conduit de bipasse (B10), qui empêche une élévation de pression dans la partie (B12) de celui-ci qui est reliée au deuxième orifice principal (12B) de la pompe.

8. Dispositif selon l'une quelconque des revendications 1 à 7, comportant en outre un clapet anti-retour (24) interposé sur le premier conduit de bipasse (B10), qui empêche la circulation de fluide dans ce conduit en provenance de la première enceinte de bipasse.

9. Dispositif selon l'une quelconque des revendications 1 à 8, comportant en outre :
- un troisième moteur hydraulique (36;56), comportant au moins un premier (361;561) et un deuxième (362;562) moteur élémentaire, chaque moteur élémentaire présentant une première et une deuxième enceinte pour l'alimentation et l'échappement de fluide du moteur ;
dispositif dans lequel, en mode travail comme en mode route :
- la deuxième enceinte du deuxième moteur élémentaire (362;562) du troisième moteur est reliée au deuxième orifice principal (12B) de la pompe ;
en mode 'travail', la première enceinte (361A,362A) de chacun des deux moteurs élémentaires du troisième moteur est reliée au premier orifice principal (12A) de la pompe ;
les moyens d'isolement sont aptes, en mode 'route', à :
- isoler l'une de l'autre les premières enceintes (361A,362A) du premier et du deuxième moteur élémentaire du troisième moteur, et simultanément
- mettre en communication l'une de celles-ci (361A) dite première enceinte d'alimentation du troisième moteur avec le premier orifice principal de la pompe de manière à alimenter l'un des moteurs élémentaires, et
- mettre en communication l'autre de celles-ci (362A) dite première enceinte de bipasse du troisième moteur avec le deuxième orifice principal de la pompe via un deuxième conduit de bipasse (B20) de manière à bipasser l'autre des moteurs élémentaires.

10. Dispositif selon la revendication 9, dans lequel la deuxième enceinte du premier moteur élémentaire (561) du troisième moteur et la première enceinte du premier moteur (44A) sont reliées l'une à l'autre en série par une deuxième conduite de série (S2-S3).

11. Dispositif selon la revendication 9, comportant en outre un quatrième moteur (34) présentant une première et une deuxième enceinte (34A,34B) pour l'alimentation et l'échappement de fluide du moteur, et dans lequel la deuxième enceinte (361B) du premier moteur élémentaire (361) du troisième moteur et la première enceinte (34A) du quatrième moteur (34) sont reliées l'une à l'autre en série par une deuxième conduite de série (S2), la deuxième enceinte (34B) du quatrième moteur étant reliée au deuxième orifice principal de la pompe.

12. Dispositif selon l'une quelconque des revendications 9 à 11, comportant en outre un diviseur de débit (T) avec deux voies d'entrée (T1,T2) et une voie de sortie (T3), les deux voies d'entrée étant reliées respectivement aux deuxièmes enceintes (162B,362B) du deuxième moteur élémentaire du deuxième et du troisième moteur, et la voie de sortie (T3) étant reliée au deuxième orifice principal de la pompe, le diviseur de débit étant agencé de manière à imposer un débit égal à travers chacune de ses deux voies d'entrée.

13. Dispositif selon l'une quelconque des revendications 9 à 11, comportant en outre un diviseur de débit avec une voie d'entrée et deux voies de sortie, les deux voies de sortie étant reliées en mode travail aux premières enceintes du premier et du deuxième moteur élémentaire respectivement du deuxième et du troisième moteur, et la voie d'entrée étant reliée au premier orifice principal de la pompe, le diviseur de débit étant agencé de manière à imposer un débit égal à travers chacune de ses deux voies de sortie.

14. Dispositif selon l'une quelconque des revendications 1 à 13, comportant en outre un circuit (240) de valve d'échange avec deux voies d'entrée (A,B) et une voie de sortie (G), les deux voies d'entrée étant reliées aux deux orifices principaux (12A,12B) de la pompe, la voie de sortie étant reliée à un réservoir sans surpression, la valve d'échange étant apte à diriger vers le réservoir sans surpression un fluide provenant de celui des orifices principaux de la pompe qui est à la pression la plus basse, si la pression de ce fluide excède une valeur prédéterminée ; le dispositif comprenant des moyens (244) de blocage de valve d'échange activables, les moyens de blocage étant aptes à empêcher l'évacuation de fluide par la pompe lorsqu'ils sont activés.

15. Engin mobile comportant un organe de déplacement arrière et un organe de déplacement avant, et un dispositif selon l'une quelconque des revendications 1 à 14, dans lequel ledit premier moteur est attelé à l'organe de déplacement avant ; et ledit deuxième moteur est attelé à l'organe de déplacement arrière.

## Patentansprüche

1. Hydrostatische Übertragungsvorrichtung (10), umfassend:
- eine Hydraulikpumpe (12) mit zwei Hauptöffnungen (12A, 12B),
- einen ersten Hydraulikmotor (14, 44, 54),
- einen zweiten Hydraulikmotor (16), umfassend mindestens einen ersten (161) und einen zweiten (162) elementaren Motor, wobei jeder elementare Motor sowie der erste Motor einen ersten und einen zweiten Raum zur Zuleitung und Ableitung eines Fluids des Motors aufweisen,
wobei die Vorrichtung mindestens zwei Funktionsmodi aufweist, "Arbeitsmodus" und "Straßenmodus" genannt, bei denen:
- der zweite Raum (161 B) des ersten elementaren Motors (161) des zweiten Motors und der erste Raum (14A) des ersten Motors (14) miteinander in Serie durch eine erste serielle Leitung (S1) verbunden sind, wobei der zweite Raum (14B) des ersten Motors mit der zweiten Hauptöffnung (12B) der Pumpe verbunden ist, und
- der zweite Raum des zweiten elementaren Motors (162) des zweiten Motors mit der zweiten Hauptöffnung der Pumpe verbunden ist,
wobei bei der Vorrichtung im "Arbeitsmodus" der erste Raum (161 A, 162A) jedes der beiden elementaren Motoren des zweiten Motors mit einer ersten Hauptöffnung (12A) der Pumpe verbunden ist,
wobei die Vorrichtung **dadurch gekennzeichnet ist, dass** sie Isoliermittel (20) aufweist, die geeignet sind, im "Straßenmodus":
- die ersten Räume (161 A, 162A) des ersten und des zweiten elementaren Motors des zweiten Motors voneinander zu isolieren,
- einen derselben, erster Zuleitungsraum (161 A) genannt, mit der ersten Hauptöffnung der Pumpe in Verbindung zu bringen, um einen der elementaren Motoren des zweiten Motors zu versorgen, und
- den anderen derselben, erster Umgehungsraum (162A) genannt, mit der zweiten Hauptöffnung der Pumpe (12B) über eine erste Umgehungsleitung (B10) in Verbindung zu bringen, um den anderen (162) der elementaren Motoren des zweiten Motors (16) in Umgehung zu schalten.

2. Vorrichtung nach Anspruch 1, bei der die Isoliermittel einen in zwei Positionen steuerbaren Verteiler (21) umfassen, der derart angeordnet ist, dass er es ermöglicht, selektiv den ersten Umgehungsraum (162A) mit der einen oder der anderen der Öffnungen der Pumpe zu verbunden, je nachdem, ob sich die Vorrichtung im Arbeitsmodus oder im Straßenmodus befindet.

3. Vorrichtung nach Anspruch 2, bei der der Verteiler (21) drei Wege umfasst, nämlich einen stromabwärtigen Weg (A), der mit der ersten Öffnung (162B) des zweiten Untermotors verbunden ist; und zwei stromaufwärtige Wege (B, C), die jeweils mit den beiden Hauptöffnungen der Pumpe (12A, 12B) durch zwei Verbindungsleitungen (B10, C1) verbunden sind.

4. Vorrichtung nach einem der Ansprüche 1 bis 3, bei der der erste Zuleitungsraum der erste Raum (161 A) des ersten elementaren Motors ist.

5. Vorrichtung nach einem der Ansprüche 1 bis 3, bei der der erste Zuleitungsraum der erste Raum (162A) des zweiten elementaren Motors ist.

6. Vorrichtung nach einem der Ansprüche 1 bis 5, bei der:
- der zweite Motor (46) ferner einen dritten elementaren Motor (463) umfasst, der einen ersten und einen zweiten Zuleitungs-/Ableitungsraum (463A, 463B) aufweist,
- der erste Raum (463A) des dritten elementaren Motors mit dem ersten Raum (461A) des ersten elementaren Motors verbunden ist, und
- der zweite Raum (463B) des dritten elementaren Motors mit der zweiten Hauptöffnung der Pumpe (12B) verbunden ist.

7. Vorrichtung nach einem der Ansprüche 1 bis 6, ferner umfassend einen Druckminderer (22), der auf der ersten Umgehungsleitung (B10) angeordnet ist und eine Druckerhöhung in dem Teil (B12) derselben, der mit der zweiten Hauptöffnung (12B) der Pumpe verbunden ist, verhindert.

8. Vorrichtung nach einem der Ansprüche 1 bis 7, ferner umfassend eine Rückschlagklappe (24), die auf der ersten Umgehungsleitung (B10) angeordnet ist und die Fluidzirkulation in dieser Leitung, die vom ersten Umgehungsraum kommt, verhindert.

9. Vorrichtung nach einem der Ansprüche 1 bis 8, ferner umfassend:
- einen dritten Hydraulikmotor (36; 56), umfassend mindestens einen ersten (361; 561) und einen zweiten (362; 562) elementaren Motor, wobei jeder elementare Motor einen ersten und einen zweiten Raum zur Zuleitung und Ableitung eines Fluids des Motors aufweisen,
wobei bei der Vorrichtung im Arbeitsmodus wie im Straßenmodus:
- der zweite Raum des zweiten elementaren Motors (362; 562) mit der zweiten Hauptöffnung (12B) der Pumpe verbunden ist,
wobei im "Arbeitsmodus" der erste Raum (361 A, 362A) des ersten und des zweiten elementaren Motors mit der ersten Hauptöffnung (12A) der Pumpe verbunden ist,
wobei die Isoliermittel geeignet sind, im "Straßenmodus":
- die ersten Räume (361 A, 362A) des ersten und des zweiten elementaren Motors des dritten Motors voneinander zu isolieren, und gleichzeitig
- einen derselben (361A), erster Zuleitungsraum des dritten Motors genannt, mit der ersten Hauptöffnung der Pumpe in Verbindung zu bringen, um einen der elementaren Motoren zu versorgen, und
- den anderen derselben (362A), erster Umgehungsraum des dritten Motors genannt, mit der zweiten Hauptöffnung der Pumpe über eine zweite Umgehungsleitung (B20) in Verbindung zu bringen, um den anderen der elementaren Motoren in Umgehung zu schalten.

10. Vorrichtung nach Anspruch 9, bei der der zweite Raum des ersten elementaren Motors (561) des dritten Motors und der erste Raum des ersten Motors (44A) miteinander in Serie durch eine zweite serielle Leitung (S2-S3) verbunden sind.

11. Vorrichtung nach Anspruch 9, ferner umfassend einen vierten Motor (34), der einen ersten und einen zweiten Raum (34A, 34B) zur Zuleitung und Ableitung eines Fluids des Motors aufweist, und bei der der zweite Raum (361 B) des ersten elementaren Motors (361) des dritten Motors und der erste Raum (34A) des vierten Motors (34) miteinander in Serie durch eine dritte serielle Leitung (S2) verbunden sind, wobei der zweite Raum (34B) des vierten Motors mit der zweiten Hauptöffnung der Pumpe verbunden ist.

12. Vorrichtung nach einem der Ansprüche 9 bis 11, ferner umfassend einen Stromteiler (T) mit zwei Eintrittswegen (T1, T2) und einem Austrittsweg (T3), wobei die beiden Eintrittswege jeweils mit den zweiten Räumen (162B, 362B) des zweiten elementaren Motors des zweiten und des dritten Motors verbunden sind, und wobei der Austrittsweg (T3) mit der zweiten Hauptöffnung der Pumpe verbunden ist, wobei der Stromteiler derart angeordnet ist, dass er eine gleiche Durchflussmenge durch jeden seiner beiden Eintrittswege schickt.

13. Vorrichtung nach einem der Ansprüche 9 bis 11, ferner umfassend einen Stromteiler mit einem Eintrittsweg und zwei Austrittswegen, wobei die beiden Austrittswege im Arbeitsmodus mit den ersten Räumen des ersten und des zweiten elementaren Motors des zweiten bzw. des dritten Motors verbunden sind, und wobei der Eintrittsweg mit der ersten Hauptöffnung der Pumpe verbunden ist, wobei der Stromteiler derart angeordnet ist, dass er eine gleiche Durchflussmenge durch jeden seiner beiden Austrittswege schickt.

14. Vorrichtung nach einem der Ansprüche 1 bis 13, ferner umfassend eine Austauschventilschaltung (240) mit zwei Eintrittswegen (A, B) und einem Austrittsweg (G), wobei die beiden Eintrittswege mit den beiden Hauptöffnungen (12A, 12B) der Pumpe verbunden sind, wobei der Austrittsweg mit einem Behälter ohne Überdruck verbunden ist, wobei das Austauschventil geeignet ist, ein Fluid, das von jeder der Hauptöffnungen der Pumpe kommt, die den niedrigsten Druck aufweist, ohne Überdruck zu dem Behälter zu leiten, wenn der Druck dieses Fluids einen vorbestimmten Wert überschreitet,
wobei die Vorrichtung aktivierbare Mittel (244) zur Feststellung des Austauschventils umfasst, wobei die Feststellungsmittel geeignet sind, die Ableitung eines Fluids durch die Pumpe zu verhindern, wenn sie aktiviert sind.

15. Mobile Maschine, umfassend ein Rückwärtsbewegungselement und ein Vorwärtsbewegungselement und eine Vorrichtung nach einem der Ansprüche 1 bis 14, bei der der erste Motor an das Vorwärtsbewegungselement angehängt ist und der zweite Motor an das Rückwärtsbewegungselement angehängt ist.

## Claims

1. Hydrostatic transmission apparatus (10) including:
• a hydraulic pump (12) with two main ports (12A, 12B);
• a first hydraulic motor (14, 44, 54);
• a second hydraulic motor (16) including at least a first elementary motor (161) and a second elementary motor (162), each elementary motor and the first motor having first and second enclosures for feeding fluid to the motor and for discharging fluid therefrom;
the apparatus has at least two operating modes referred to as "work" mode and "road" mode, in which modes:
• the second enclosure (161B) of the first elementary motor (161) of the second motor and the first enclosure (14A) of the first motor (14) are connected together in series via a first series duct (S1), the second enclosure (14B) of the first motor being connected to the second main port (12B) of the pump; and
• the second enclosure of the second elementary motor (162) of the second motor is connected to the second main port of the pump;
in which apparatus, in "work" mode, the first enclosure (161A,162A) of each of the two elementary motors of the second motor is connected to a first main port (12A) of the pump;
the apparatus being **characterized in that** it has isolation means (20) that are suitable for, in "road" mode :
• isolating the first enclosures (161A, 162A) of the first and second elementary motors of the second motor from each other;
• putting a "feed" one of said first enclosures (161A) into communication with the first main port of the pump in such a manner as to feed one of the elementary motors of the second motor; and
• putting the other one of said first enclosures, referred to as the "bypass" first enclosure (162A) into communication with the second main port of the pump (12B) via a first bypass duct (B10) in such a manner as to bypass the other one (162) of the elementary motors of the second motor (16).

2. Apparatus according to claim 1, wherein the isolation means include a two-position controllable distributor (21) that is arranged in such a manner as to make it possible to connect the bypass first enclosure (162A) selectively to one or to the other of the ports of the pump, depending on whether the apparatus is in work mode or in road mode.

3. Apparatus according to claim 2, wherein the distributor (21) has three ports, namely a downstream port (A) connected to the first port (162B) of the second sub-motor, and two upstream ports (B, C) that are connected to respective ones of the two main ports (12A, 12B) of the pump via respective connection ducts (B10, C1).

4. Apparatus according to any one of claims 1 to 3, wherein the feed first enclosure is the first enclosure (161A) of the first elementary motor.

5. Apparatus according to any one of claims 1 to 3, wherein the feed first enclosure is the first enclosure (162A) of the second elementary motor.

6. Apparatus according to any one of claims 1 to 5, wherein:
• the second motor (46) further includes a third elementary motor (463) having feed/discharge first and second enclosures (463A, 463B);
• the first enclosure (463A) of the third elementary motor is connected to the first enclosure (461A) of the first elementary motor; and
• the second enclosure (463B) of the third elementary motor is connected to the second main port (12B) of the pump.

7. Apparatus according to any one of claims 1 to 6, further including a pressure reducer (22) interposed on the first bypass duct (B10) and that prevents pressure from rising in the portion (B12) of said first bypass duct that is connected to the second main port (12B) of the pump.

8. Apparatus according to any one of claims 1 to 7, further including a check valve (24) interposed on the first bypass duct (B10) and that prevents fluid from flowing in said first bypass duct coming from the bypass first enclosure.

9. Apparatus according to any one of claims 1 to 8, further including:
- a third hydraulic motor (36, 56) including at least a first elementary motor (361; 561) and a second elementary motor (362; 562), each elementary motor having first and second enclosures for feeding fluid to the motor and for discharging fluid therefrom;
in which apparatus, both in work mode and in road mode:
• the second enclosure of the second elementary motor (362; 562) of the third motor is connected to the second main port (12B) of the pump;
in "work" mode, the first enclosure (361A, 362A) of each of the two elementary motors of the third motor is connected to the first main port (12A) of the pump;
the isolation means are suitable for, in "road" mode:
• isolating the first enclosures (361A, 362A) of the first and second elementary motors of the third motor from each other, and, simultaneously,
• putting a "feed" one of said first enclosures (361A) of the third motor into communication with the first main port of the pump in such a manner as to feed one of the elementary motors; and
• putting the other one of said first enclosures, referred to as the "bypass" first enclosure (362A) into communication with the second main port of the pump via a second bypass duct (B20) in such a manner as to bypass the other one of the elementary motors.

10. Apparatus according to claim 9, wherein the second enclosure of the first elementary motor (561) of the third motor and the first enclosure of the first motor (44A) are interconnected in series via a second series duct (S2-S3).

11. Apparatus according to claim 9, further including a fourth motor (34) having first and second enclosures (34A, 34B) for feeding fluid to the motor and for discharging fluid therefrom, and wherein the second enclosure (361B) of the first elementary motor (361) of the third motor and the first enclosure (34A) of the fourth motor (34) are connected together in series via a second series duct (S2), the second enclosure (34B) of the fourth motor being connected to the second main port of the pump.

12. Apparatus according to any one of claims 9 to 11, further including a flow divider (T) having two inlet ports (T1,T2) and one outlet port (T3), the two inlet ports being connected to the second enclosures (162B, 362B) of the second elementary motor of the second and third motors respectively, and the outlet port (T3) being connected to the second main port of the pump, the flow divider being arranged in such a manner as to constrain fluid to flow at an equal flow rate through each of its two inlet ports.

13. Apparatus according to any one of claims 9 to 11, further including a flow divider having one inlet port and two outlet ports, the two outlet ports being connected, in the work mode, to the first enclosures of the first and second elementary motors respectively of the second and third motors, and the inlet port being connected to the first main port of the pump, the flow divider being arranged in such a manner as to constrain fluid to flow at an equal flow rate through each of its two outlet ports.

14. Apparatus according to any one of claims 1 to 13, further including an exchange valve circuit (240) having two inlet ports (A, B) and one outlet port (G), the two inlet ports being connected to the two main ports (12A, 12B) of the pump, the outlet port being connected to an overpressure-free reservoir, the exchange valve being suitable for directing to the overpressure-free reservoir fluid that is coming from that one of the main ports of the pump that is at the lower pressure, if the pressure of said fluid exceeds a predetermined value;
the apparatus further including activatable blocking means (244) for blocking the exchange valve, the blocking means being suitable for preventing the fluid from being removed by the pump when they are activated.

15. A vehicle including a rear vehicle mover member and a front vehicle mover member, and an apparatus according to any one of claims 1 to 14, wherein said first motor is coupled to the front vehicle mover member; and said second motor is coupled to the rear vehicle mover member.
